# EUROPÄISCHE PATENTSCHRIFT

(11) **EP 0 341 569 B1**
(45) Veröffentlichungstag und Bekanntmachung des Hinweises auf die Patenterteilung: **30.11.1994**
(21) Anmeldenummer: 89108027.7
(22) Anmeldetag: 03.05.1989
(51) Int. Cl.: C08K 5/16, C08K 3/26, C08K 5/36, C08K 5/13, C08L 61/00, C08K 9/10, B32B 27/04

(54) **Verfahren zur Herstellung von Verbundwerkstoffen mit verringerter Formaldehydemission**
Process for the preparation of composite materials with a lowered formaldehyde emission
Procédé de préparation émettant une quantité réduite de formaldéhyde, de matériaux composites

(30) Priorität: 04.05.1988 DE 3815204
(43) Veröffentlichungstag der Anmeldung: 15.11.1989
(73) Patentinhaber: GRUBER + WEBER GMBH & CO KG, D-76586 Gernsbach (DE)
(72) Erfinder: Autenrieth, Dieter, Dr., D-7060 Schorndorf (DE); Schmidt, Heinz, Dipl.-Ing.(FH), D-7553 Muggensturm (DE)
(74) Vertreter: Kinzebach, Werner, Dr.

(56) Entgegenhaltungen:
- EP-A- 0 206 269
- WO-A-83/04037
- DE-A- 1 094 979
- DE-A- 2 456 979
- DE-A- 3 443 002
- FR-A- 2 230 669
- US-A- 2 209 943

## Beschreibung

Die Erfindung betrifft ein Verfahren zur Herstellung von Verbundwerkstoffen aus Holzteilen oder zellulosehaltigen Formteilen oder Formteilen aus Kunststoff bzw. Mineralteilchen mit verringerter Formaldehydemission unter Verwendung eines Formaldehydfängers, wobei man Werkstoffteile mit einem wäßrigen vorkondensierten Formaldehydharz imprägniert, aus diesen Teilen einen Formkörper herstellt und den Formkörper anschließend unter Wärmeeinwirkung härtet.

Bekanntlich werden Formaldehydharze in großem Umfang, beispielsweise für die Herstellung von Holzwerkstoffen, eingesetzt. Im allgemeinen werden diese Harze in der Hitze ausgehärtet, wobei Formaldehyd, insbesondere bei Harnstoff-Formaldehyd-Harzen, in geringen Mengen freigesetzt wird. In den letzten Jahren wurde Formaldehyd in der Gefahrstoffverordnung bzw. MAK-Liste als gesundheitsgefährdend eingestuft. Dies gilt insbesondere für Holzverbundwerkstoffe, wie Holzspanplatten und Faserplatten, sowie Formteile aus zellulosehaltigen Fasern oder mineralischen oder Kunststoffteilchen bzw. Holzverbundwerkstoffen, wie Sperrholz, Holzschichtstoffen, edelfurnierten Werkstoffen usw., welche unter Verwendung von formaldehydvorkondensiertem Harz (Leimen) hergestellt und häufig verwendet werden.

Man ist daher gezwungen, Maßnahmen zu ergreifen, welche die Formaldehyd-Emission bei Aushärten dieser Harze verringern.

Zu diesem Zweck hat man bei der Herstellung von Harnstoff-Formaldehydharzen das Molverhältnis von Formaldehyd-Harnstoff von bisher 2 auf etwa 1 herabgesetzt. Dies hat aber den Nachteil, daß damit zu einem nur eine sehr geringe Reduzierung der Formaldehydabgabe erreicht wird und daß zum anderen die Eigenschaften bzw. die Herstellung des verleimten Gegenstandes erheblich schwieriger und empfindlicher auf Einflüsse, wie Holzart, Holzfeuchte, Temperatur usw. reagiert.

Wenn man nämlich ein formaldehydhaltiges vorkondensiertes Harz mit z.B. verringertem Formaldehydharnstoffverhältnis für die Herstellung von Holzspanplatten verwendet, so haben die Spanplatten eine geringere Festigkeit und schlechtere Quellwerte (vgl. George E.Myers: How mole ratio of UF resin affects formaldehyde emission and other properties; A literature critique; FOREST PRODUCTS JOURNAL, Vol.34, No.5, May 1984, 33-41).

Weiter hat man bereits Harnstoff in Form einer wässrigen Lösung dazu verwendet, die Formaldehydemission zu verringern. Dabei hat man den festen Harnstoff in ein Harnstoff-Formaldehyd-Reaktionsgemisch nach dem Abklingen der Methylolbildung gegeben und darin aufgelöst oder aber eine vorher hergestellte Harnstofflösung mit bereits beleimten Holzteilen in Kontakt gebracht. (Zur Rolle des sogenannten "second urea" vgl.A.Pizzi: Aminoresin Wood Adhesives; Beitrag im Sammelwerk "WOOD ADHESIVES", 81-84; darin werden 10 Literaturstellen dazu zitiert).

Die Anwendung einer Harnstofflösung bewirkt zunächst ein Absinken der Formaldehydkonzentration im noch nicht ausgehärteten Leim. Dadurch wird eine unerwünschte Nebenreaktion, nämlich die Substituion von Methylolgruppen durch weitere Methylolgruppen unter Freisetzung von Formaldehyd entsprechend dem Massenwirkungsgesetz begünstigt:

RNHCH₂OH + HOCH₂NHR' → RNHCH₂NHR' + H₂O + RCHO

Der dadurch freigesetzte Formaldehyd bildet mit Harnstoff niedermolekulare Methyolharnstoffverbindungen, die zwar Zelluloseäther bilden und so zur Klebekraft beitragen, die aber auch die mechanische Festigkeit des vernetzten Formaldehyd-Harnstoff-Copolymers beeinträchtigen (vgl.dazu K.Horioka, M.Noguchi, K.Moriya und A.Oguro: Bull.Gov.For.Exp.Sta.Tokyo 113:20 (1959); Zitat Nr.50 in A.Pizzi: Aminoresin Wood Adhesives, S.84, in WOOD ADHESIVES).

Die DE-OS 16 53 167 beschreibt ein Verfahren zur Herstellung von Spanplatten, wobei man den Holzspänen nach dem Beleimen feinteilige Stoffe beimengt, die den Formaldehyd chemisch binden. Diese feinteiligen Stoffe erhält man durch Imprägnieren eines Trägermaterials, z.B. Holzspäne oder Holzstaub, mit einer wäßrigen Lösung eines Formaldehydfängers, wie Harnstoff, Melamin oder Phenole.

Die EP-A-206 269 beschreibt ein pulverförmiges Aminoplastleimharz, das für die Herstellung von Holzwerkstoffen oder als Papierklebemittel Verwendung findet. Die Herstellung des Leimharzes erfolgt dadurch, daß man die zur Anwendung kommenden Harze sprühtrocknet und dann mit Harnstoff und einem Fließhilfsmitte vermischt. Alternativ werden die Harze vor dem Sprühtrocknen mit Harnstoff und gegebenenfalls hydrophilem Siliciumdioxid vermischt. Zur Anwendung wird das Aminoplastleimharz zu einer wäßrigen Leimflotte angesetzt, welche dann auf die Holzwerkstoffe, beispielsweise Fichtenspäne, aufgebracht wird.

Diese Aufgabe wird gelöst durch ein Verfahren der eingangs genannten Art, das dadurch gekennzeichnet ist, daß das Härten in Gegenwart eines pulverförmigen oder geprillten Formaldehydfängers, der mit einem wasserbeständigen und/oder wasserundurchlässigen Überzug versehen ist, erfolgt.

Geeignete Formaldehydfänger sind Melamine, Dicyandiamid, Thioharnstoff, Dibutylthioharnstoff, Ammoniumcarbonat, Polyacrylsäureamide, Guanidin, Carbamate mit freien Amidfunktionen, Phenole, Resorcin oder Diphenylmethandiisocyanat und insbesondere Harnstoff.

Der Erfindung liegt die Erkenntnis zugrunde, daß die Handhabung von Harzen mit einem höheren Molverhältnis im Herstellungsverfahren sehr viel einfacher und bezüglich der Festigkeitswerte bessere Ergebnisse erbringt. Außerdem wurde erkannt, daß wenn es gelingt, einen Formaldehydfänger in fester Form in den Bereich der unter höherem Temperatureinfluß aushärtenden Leimfuge zu bringen, dieser feste Formaldehydfänger sich während des Kondensierungsvorganges des Harzes bzw. etwas verzögert, so zersetzt, daß die während des Abbindevorganges frei werdenden Formaldehydmoleküle gut abgefangen werden, ohne daß das oben beschriebene Molverhältnis von Harnstoff zu Formaldehyd während des Abbindevorganges der Leimfuge selbst ungünstig beeinflußt wird.

Die Herstellung der Verbundwerkstoffe erfolgt in üblicher Weise. Erfindungsgemäß ist es jedoch entscheidend, daß vor dem Härten, beispielsweise in einer Heizpresse, ein Formaldehydfänger in fester Form, d.h. als Partikel, zugesetzt wird. Dabei ist es wesentlich, daß der Formaldehydfänger in fester Form erhalten bleibt, d.h. er darf sich in der Harzlösung nicht auflösen.

Zu diesem Zweck versieht man die Formaldehydfängerpartikel mit einem wasserbeständigen und/oder wasserundurchlässigen Überzug, beispielsweise aus Wachsen, wie z.B. Carnaubawachs, Esterdemontansäure und Bienenwachs, oder Fetten, wie z.B. Glycerin-tri-behenat, Glycerin-tri-stearat, mit Schmelzpunkten zwischen 50 und 110 °C. Die Herstellung der mit einem Überzug versehenen Partikel ist bekannt. Sie sind auch im Handel erhältlich. Die geschützten Partikel kann man dann vor, während oder nach der Beleimung auf das Gut aufbringen oder auch in der Harzflotte suspendieren und die Harzflotte dann in üblicher Weise auf die Holzteile aufbringen. Darüber hinaus hat der Überzug zur Folge, daß sich die Partikel erst in der Endphase des Aushärtungsprozesses auflösen und so die nachteilige Wirkung von vorzeitig zersetztem Formaldehydfänger vermieden wird.

Die mit einem Überzug versehenen Partikel enthalten vorteilhafterweise zusätzlich ein inertes Material, um das spezifische Gewicht der Partikel zu modifizieren. Dadurch ist es möglich, eine stabile Suspension der Partikel im Formaldehydharz zu erzeugen. Geeignete inerte Materialien sind z.B. Styropor- und Polyethylengranulat.

Die Partikel kann man gleichmäßig über alle Teile (z.B. Holzspäne) des Verbundwerkstoffes verteilen. Es ist jedoch vorteilhaft, sie in die Deckschicht der Verbundwerkstoffe, vorzugsweise in geprillter Form, oder in die Mittelschicht (oder Zwischenschicht), vorzugsweise in geprillter Form zusammen mit einem Katalysator, einzumischen.

In der Deckschicht ist nämlich die Temperatur beim Härten in einer Heizpresse am höchsten, so daß die für die Wirksamkeit des Formaldehydfängers erforderliche Zersetzung sichergestellt ist.
In bestimmten Anwendungen läßt sich der Formaldehydfänger jedoch auch zwischen den Deck-, Zwischen- und Mittelschichten einbringen.

In der Mittelschicht ist die Temperatur beim Härten niedriger, so daß dort vorzugsweise ein Katalysator eingebracht wird.

Die Teilchengröße des zur Anwendung kommenden Formaldehydfängers kann in einem weiten Bereich variieren, 0,001 mm - 3 mm Durchmesser. Sie sollte aber der Größe der zu verleimenden Teilchen bzw. der zu verleimenden Teile bzw. den Anforderungen der Leimfuge, angepaßt werden.
Wesentlich ist in jedem Fall, daß der Formaldehydfänger bis zum Härten in fester Form erhalten bleibt.

Der Formaldehydfänger kann entweder in gemahlener oder vorzugsweise in geprillter Form in handelsüblicher Qualität eingesetzt werden.

Die Anteilsmenge an zur Anwendung kommenden Harnstoff richtet sich nach dem Molverhältnis des Leimes und dem zu erreichenden Formaldehydabgabewert, z.B. bewirkt bei einem Molverhältnis von Harnstoff/Formaldehyd im Ausgangsleim von 1 : 1,23 die Zugabe einer Menge von ca. 1 - 10 % an Formaldehydfänger, bezogen auf die Festharzmenge eine Reduzierung des Formaldehydabgabewertes um 20 - 80 %. Die Optimierung muß erfolgen unter Berücksichtigung der Qualitätsmerkmale des Endproduktes.

Es wird ausdrücklich darauf verwiesen, daß es möglich ist, sowohl reine Aminoplastharnstoffharze als auch solche, die mit Melaminharzanteilen von 1-10 % verschnitten sind, als auch säurehärtende Phenolharze, wie Novolack, etc., alles Harzsysteme die unter Einfluß von Formaldehyd aushärten, entsprechend im Formaldehydabgabewert nach dem erfindungsgemässen System zu verringern.

Die Wirksamkeit des festen Formaldehydfängers im Harz beruht darauf, daß er sich in der Hitze zersetzt, z.B. bildet sich aus Harnstoff unter Abspaltung von Ammoniak intermediär die hochreaktive Isocyansäure, Isocyansäure addiert sich leicht an Alkohole und Polyole, wobei Esteramide der Carbamidsäure, also Carbamate mit freien Amidfunktionen entstehen (vgl. DE-OS 36 38 456).

Methylolgruppen, auf denen einerseits die Klebkraft des Formaldehyd-Harnstoff-Harzes, aber andererseits auch die Freisetzung von Formaldehyd beim Aushärten in der Hitze auf Grund einer unvermeidlichen teilweisen Substituion von Methylolgruppen an Amidfunktionen durch ebensolche Methylolgruppen beruht (WOOD ADHESIVES, Chemistry and Technology, edited by A.Pizzi, MARCEL DEKKER, Inc.New York and Basel 1983; darin A.Pizzi: Aminoresin Wood Adhesives, 59-104). addieren sich leicht an Isocyansäure, wie sie bei der thermischen Zersetzung von Harnstoff entstehen. Aus den dabei sich bildenden Carbamaten kann kein Formaldehyd freigesetzt werden, weil die Methylolgruppen durch Carbamidgruppen geschützt sind.

RNHCH₂OH + HN=C=O → RNHCH₂O-CONH₂ Carbamat

Carbamate mit freien Amidfunktionen bilden mit Formaldehyd wiederum Methylolgruppen, die im Reaktionsknäuel beim Aushärten z.B. des Formaldehydharnstoffharzes, wie alle übrigen Methylolgruppen die angestrebte Wirkung entfalten können, wobei z.B. der Zelluloseanteil in Holz über Ätherbrücken in analoger Weise mit dem sich vernetzenden Formaldehyd-Harnstoffharz zusammenwächst.

Dieser Vorgang wird anhand der folgenden Formeln veranschaulicht:
Zelluloseäther, wie er üblicherweise vorliegt:

Ce-O-H₂C-HNCONH-CH₂-NHCONH-CH₂-O-Ce

Zelluloseäther mit einseitig eingeführtem Carbamatanteil:

Ce-O-H₂C-HNCONH-CH₂-NHCONH-CH₂-O-CONH-CH₂-O-Ce

Um die Formaldehydemission noch stärker zu verringern, kann man den Formaldehydfänger nicht nur in die Deckschicht, sondern auch in die Mittelschicht von Holzverbundwerkstoffen einbringen. Das hat zur Folge, daß der Beginn des Dampfaustritts beim Aushärten in der Heizpresse verzögert wird, was letztlich zu einem verzögerten Einsetzen der Aushärtung des Formaldehydharzes führt. Man verwendet daher zweckmäßigerweise mehr Härter, wobei auf diesem Gebiet übliche Härter zur Anwendung kommen (beispielsweise 0,1 - 5 % Feststoff auf Feststoff bezogen), beispielsweise Säuren wie Ameisensäure, Oxalsäure, Phosphorsäure (z.B. 0,1 - 5 %), sowie schwache Säuren und vorzugsweise Ammoniumsalze (z.B. 0,1 - 5 %).

Überraschenderweise genügen schon relativ niedrige Temperaturen, wie sie im Mittelschichtbereich von Verbundwerkstoffen, wie Spanplatten und Faserplatten, erreicht werden, um z.B. Harnstoff zu zersetzen. Um jedoch die Wirkung des Formaldehydfängers in der Mittelschicht sicherzustellen, fügt man vorzugsweise einen Katalysator zu. Ein derartiger Katalysator beeinflußt die Lage des chemischen Gleichgewichts für die Zersetzungsreaktion zwar nicht, er kann diese Reaktion aber derart beeinflussen, daß die Konzentration der Zersetzungsprodukte von z.B. Harnstoff, nämlich Ammoniak und Isocyansäure, auf einem niedrigen Niveau gehalten wird, solange das Aushärten des Harnstoff-Formaldehydharzes andauert.

Es ist aber auch möglich, den Katalysator bereits bei der Herstellung des Formaldehydfängers, z.B. der Harnstoffschmelze, vor der Erstarrung und Mahlung oder aber während des Prillvorganges beizumischen oder aber den geprillten Kügelchen den Katalysator aufzusprühen.

Ein besonders bevorzugter Katalysator ist Ammoniumchlorid oder -sulfat, als weitere geeignete Katalysatoren kommen infrage: Aminhydrochloride, andere Ammoniumsalze, Cyanchlorid und Lewis-Säuren, u.a. bekannte hierfür geeignete Katalysatoren.

Ammoniak bildet mit freiem Formaldehyd Hexamethylentetramin,eine Verbindung, die oft auch im Härter enthalten ist und Isocyansäure wird von den Methylolendgruppen am Formaldehyd-Harnstoff-Copolymer abgefangen, wobei die betreffenden Methylolgruppen esterartig zu Carbamidgruppen mit jeweils einer freien Amidfunktion verlängert werden. Solche Amidfunktionen formen mit freiem Formaldehyd wiederum Methylolendgruppen an verhältnismässig großen Molekülaggregaten, die nach der Vernetzung eine große mechanische Festigkeit aufweisen.

Der Katalysator muß also in der Lage sein, die thermische Zersetzung des Formaldehydträgers und/oder die Bildung der Carbamate und/oder die Reaktion der Carbamate mit freiem oder freigesetztem Formaldehyd zu erleichtern und/oder das Aushärten des Formaldehydharzes zu beschleunigen, in welches die gebildeten Carbamate zusammen mit dem ankondensierten Formaldehyd einpolymerisiert werden, so daß die bei der thermischen Zersetzung, z.B. von Harnstoff intermediär gebildete Isocyansäure aus der Gleichgewichtsreaktion entfernt wird.

Der Katalysator kann in fester oder flüssiger Form zugegeben werden und eine homogene oder heterogene Mischung mit dem Formaldehydfänger bilden. Vorzugsweise verwendet man Partikel, auf deren Oberfläche der Katalysator in fester Form aufgebracht ist und die mit einem Überzug, wie oben beschrieben, versehen sind. Zu diesem Zweck wird der Katalysator z.B. dem Harnstoff vorteilhafterweise in Pulverform gleichmäßig zugemischt. Der Katalysator haftet dabei aufgrund der Hygroskopizität des Harnstoffes an dessen Oberfläche. Der Katalysator kann jedoch auch durch Benetzen der Partikel mit einer Lösung oder Suspension des Katalysators aufgebracht werden. Anschließend wird gegebenenfalls getrocknet. Im Falle einer heterogenen Mischung bildet der Katalysator zumindest teilweise(bei Vorhandensein einer Mischungslücke im System Formaldehydträger-Katalysator) eine separate feste Phase.

Vorzugsweise verwendet man einen Katalysator, der die Schmelztemperatur des reinen Formaldehydfängers herabsetzt.

Die Menge an Katalysator liegt im allgemeinen im Bereich von 0,1 bis 15 %, vorzugsweise von 5 bis 10 %, bezogen auf die Menge an Formaldehydfänger. Wie bereits erwähnt, wird das Verfahren zur Herstellung der Verbundwerkstoffe in üblicher Weise durchgeführt und ist dem Fachmann bekannt. Als Formaldehydharz kommen dabei im Handel erhältliche Produkte zur Anwendung, z.B. die SAR-Leime UF, MUF, MUPF und MF der der Chemischen Werke Saar-Lothringen; die Kaurit-, Kauresin- und Kauramin-Leime der BASF AG; das melaminverstärkte Harnstoff-Formaldehydharz Type 0210 der DSM Chemieverkaufsgesellschaft mbH; die Harze L62, L 2590 und L 168 der Firma Montedison und das Harz des Typs 2503 der Firma Bakelite.

Die Menge der zur Anwendung kommenden Harze liegen im Bereich von 3 - 50 % vorzugsweise bei Holzwerkstoffen 4 - 15 % Festharz bezogen auf das Fertigprodukt.

Der Leim wird in üblicher Weise auf die Teile aufgetragen durch Besprühen, nach dem Knetprinzip oder im Walzenauftrag.

Der Härter wird üblicherweise in den Leim vermischt.

Die Partikel werden entweder, wie oben beschrieben, maschinell aufgestreut auf die schon fertig gestellte Leimfuge oder aber in die Leimsuspension, oder auf die zu verleimende Fuge vor der Beleimung aufgetragen.

Das so hergestellte Teil wird in einer geeigneten Presse zu Formkörpern vorverdichtet. Das Aushärten der Formkörper erfolgt dann in Heizpressen bei ca. 70 - 250 °C.

Die nachfolgenden Beispiele erläutern die Erfindung. Die Formaldehydfänger kommen dabei jeweils mit einem Wachs beschichtet zur Anwendung.

### Beispiel 1:

### E1-Qualität erreicht, trotz E2-Beleimung:

Gepulverter bzw. geprillter Harnstoff ohne Katalysator als Zusatz in den vorher geleimten Deckschichtspänen.

In den beleimten Deckschichtspänen sind ungefähr 10 % Festharz enthalten (Festharzgehalt bezogen auf Deckschichtspäne atro).

Als Zusatz werden 24 % Harnstoff verwendet (Zusatz bezogen auf den Festharzgehalt in den beleimten Deckschichtspänen).

Es werden 16 mm Spanplatten (geschliffen) mit E2-Beleimung in MS (Mittelschicht) und DS (Deckschicht) hergestellt.
- Versuch Nr.: 21:: 24 % gepulverter Harnstoff als Zusatz in den beleimten DS-Spänen
- Versuch Nr.: 23:: 24 % geprillter Harnstoff als Zusatz in den beleimten DS-Spänen.
758 g beleimte DS-Späne mit ca. 11 % Feuchte und 10 % Festharz ≙ 121 %.
758 g beleimte DS-Späne ≙ 121 % ≙ 626 gr Späne atro.
Beleimung:
62,6 g Festharz = 100 %. Zusatz 15,2 gr Harnstoff ≙ 24,3 %.

Mit gepulvertem Harnstoff:

| | Nullprobe | Probe mit Zusatz |
|---|---|---|
| Biegefestigkeit daN/cm² | x = 202,2 | x = 175,8 |
| | s = 19,8 | s = 21,7 |
| Querzugfestigkeit daN/cm² | x = 0,51 | x = 0,56 |
| | s = 0,17 | s = 0,10 |
| Quellung 2 Std., % | x = 5,08 | x = 6,42 |
| | s = 1,5 | s = 1,2 |
| Rohdichte kg/m³ | x = 703 | x = 681 |
| Perforatorwert (jodom.) mg HCHO/100 gr Spanplatte atro | 24,15 (100 %) | 10,57 (43,8 %) |

Mit geprilltem Harnstoff:

| | Nullprobe | Probe mit Zusatz |
|---|---|---|
| Biegefestigkeit daN/cm² | x = 177 | x = 199 |
| | s = 18,4 | s = 15,0 |
| Querzugfestigkeit daN/cm² | x = 0,55 | x = 0,58 |
| | s = 0,12 | s = 0,11 |
| Quellung 2 Std., % | x = 5,4 | x = 7,9 |
| | s = 1,4 | s = 1,5 |
| Rohdichte kg/m³ | x = 702 | x = 728 |
| Perforatorwert (jodom.) mg HCHO/100 gr Spanplatte atro | 28,24 | 13,49 |

### Ergebnisse:

Mit 24 %igem Harnstoff in fester Form (bez. auf den Festharzgehalt in den beleimten DS-Spänen) kann der Gehalt an freiem Formaldehyd in der fertigen Spanplatte um 40 - 50 % vom Anfangswert (Nullprobe) abgesenkt werden.

### Beispiel 2:

### E1-Qualität erreicht trotz E2-Beleimung.

Gepulverter bzw. geprillter Harnstoff mit 7,0 % NH₄Cl im Gemisch als Katalysator, als Zusatz in den vorher beleimten MS-Spänen.

In den beleimten MS-Spänen ist 7,8 % Festharz enthalten (Festharzgehalt bez. auf MS-Späne atro).

Als Zusatz sind lediglich 8,6 % Gemisch bzw. 8,0 % reiner Harnstoff; allein berücksichtigt (bez. auf den Festharzgehalt in der MS), erforderlich, um eine drastische Absenkung von freiem Formaldehyd in den fertigen Spanplatten zu erreichen, ohne daß dabei die physikalisch-mechanischen Werte der Spanplatten stark verändert werden.

### Versuch Nr.: 68:

Mit gepulvertem Harnstoff und 7 % NH₄Cl im Gemisch:
Mit gepulvertem Harnstoff und 7 % NH₄Cl im Gemisch:

| | Nullprobe | 1.Probe | 2.Probe |
|---|---|---|---|
| Biegefestigkeit daN/cm² | x = 195,3 | x = 185,6 | x = 180,8 |
| | s = 23,2 | s = 21,6 | s = 14,7 |
| Querzugfestigkeit daN/cm² | x = 0,42 | x = 0,41 | x = 0,37 |
| | s = 0,05 | s = 0,03 | s = 0,04 |
| Quellung 2 Std., % | x = 8,69 | x = 9,58 | x = 9,54 |
| | s = 0,6 | s = 1,2 | s = 0,9 |
| Rohdichte kg/m³ | x = 708 | x = 724 | x = 702 |
| Perforatorwert (jodom.) mg HCHO/100 gr Spanplatte atro | 12,77 (100 %) | 4,68 (36,6 %) | 7,51 (58,8 %) |

Mit geprilltem Harnstoff und 7 % NH₄Cl im Gemisch:

| | Nullprobe | 1.Probe | 2.Probe |
|---|---|---|---|
| Biegefestigkeit daN/cm² | x = 181,2 | x = 174,5 | x = 183,7 |
| | s = 22,8 | s = 12,4 | s = 20,4 |
| Querzugfestigkeit daN/cm² | x = 0,38 | x = 0,37 | x = 0,44 |
| | s = 0,04 | s = 0,05 | s = 0,03 |
| Quellung 2 Std.,% | x = 9,69 | x = 9,92 | x = 8,94 |
| | s = 0,6 | s = 1,0 | s = 0,9 |
| Rohdichte kg/m³ | x = 686 | x = 698 | x = 711 |
| Perforatorwert (jodom.) mg HCHO/100 gr Spanplatte atro | 17,29 (100 %) | 5,97 (34,5 %) | 8,02 (46,4 %) |

### Beispiel 3:

Weitere Absenkung von freiem Formaldehyd durch Zusatz von NH₄Cl-haltigem Harnstoff unter Verwendung von E1-Leimen in DS und MS.

In den beleimten MS-Spänen ist 7,8 % Festharz enthalten.

Als Zusatz sind im 1. Versuchsteil 5,4 % Gemisch aus geprilltem Harnstoff mit 7 % NH₄Cl bzw. 5,0 % geprillter Harnstoff, allein berücksichtigt (bez. auf den Festharzgehalt in der MS), eingesetzt worden und im 2. Versuchsteil 11,5 % Gemisch wie oben bzw. 10,7 % Harnstoff geprillt allein berücksichtigt.

### Versuch Nr.: 74:

Mit 5,4 % Gemisch bzw. 5,0 % Harnstoff, geprillt, allein berücksichtigt.

| | Nullprobe | Probe |
|---|---|---|
| Biegefestigkeit daN/cm² | x = 183,9 | x = 172,9 |
| | s = 18,8 | s = 16,2 |
| Querzugfestigkeit daN/cm² | x = 0,47 | x = 0,47 |
| | s = 0,07 | s = 0,07 |
| Quellung 2 Std., % | x = 5,69 | x = 6,09 |
| | s = 0,6 | s = 0,7 |
| Rohdichte kg/m³ | x = 704 | x = 703 |
| Perforatorwert (jodom.) mg HCHO/100 gr Spanplatte atro | 8,01 (100 %) | 3,62 (45,2 %) |

MIt 11,5 % Gemisch bzw. 10,7 % Harnstoff, geprillt, allein berücksichtigt.

| | Nullprobe | Probe |
|---|---|---|
| Biegefestigkeit daN/cm² | x = 180,5 | x = 175,7 |
| | s = 13,1 | s = 15,6 |
| Querzugfestigkeit daN/cm² | x = 0,53 | x = 0,50 |
| | s = 0,08 | s = 0,06 |
| Quellung 2 Std., % | x = 7,78 | x = 7,51 |
| | s = 1,8 | s = 1,3 |
| Rohdichte kg/m³ | x = 703 | x = 697 |
| Perforatorwert (jodom.) mg HCHO/100 gr Spanplatte atro | 9,60 (100 %) | 3,11 (32,4 %) |

### Beispiel 4:

### Versuch Nr.: 83:

Verpressen von Fasermatten ohne aufgestreutes Harnstoffpulver und mit beidseitig aufgestreutem Harnstoffpulver.

Fasermatten beleimt von Fa. Casimir Kast, Formteile GmbH & Co.KG, 7562 Gernsbach.

| Pressbedingungen: | |
|---|---|
| Temperatur | 200°C |
| Pressfaktor | 24 sec./mm (2,5 mm dick) |
| Presszeit | 60 sec. |

| Zusatz: | |
|---|---|
| Nullprobe ohne Zusatz: | |
| Probe 1: | 0,35 % gepulverter Harnstoff = 2 x 0,176 gr |
| Probe 2: | 0,5 % gepulverter Harnstoff = 2 x 0,256 gr |
| Nullprobe: | starker Phenolgeruch |
| Probe 1: | wesentlich geringerer Phenolgeruch |
| Probe 2: | nahezu geruchlos |

Gepresst wurde zwischen Back-Trennpapieren.

## Patentansprüche

1. Verfahren zur Herstellung von Verbundwerkstoffen mit verringerter Formaldehyd-Emission, insbesondere solche aus zellulosehaltigen Materialien, unter Verwendung eines Formaldehydfängers, wobei man Werkstoffteile mit einem wäßrigen oder Pulverförmigen vorkondensierten Formaldehydharz imprägniert, aus diesen Teilen einen Formkörper herstellt und den Formkörper anschließend unter Wärmeeinwirkung härtet,
**dadurch gekennzeichnet,** daß
das Härten in Gegenwart eines pulverförmigen oder geprillten Formaldehydfängers, der mit einem wasserbeständigen und/oder wasserundurchlässigen Überzug versehen ist, erfolgt.

2. Verfahren nach Anspruch 1, dadurch gekennzeichnet, daS man den Formaldehydfänger auf die imprägnierten Teile aufbringt.

3. Verfahren nach Anspruch 1, dadurch gekennzeichnet, daß man den Formaldehydfänger auf das zu verleimende Gut vor der Beleimung aufbringt bzw. untermischt oder in das Formaldehydharz gibt.

4. Verfahren nach Anspruch 3, dadurch gekennzeichnet, daß der Formaidehydfänger in geprillter Form zusätzlich ein inertes Material umfaßt, um das spezifische Gewicht der Partikel so einzustellen, daß man eine stabile Suspension der Partikel des Formaldehydfängers im Formaldehydharz erhält.

5. Verfahren nach einem der vorhergehenden Ansprüche, dadurch gekennzeichnet, daß man den Formaldehydfänger zusammen mit einem Katalysator in fester oder flüssiger Form verwendet.

6. Verfahren nach Anspruch 5, dadurch gekennzeichnet, daß man eine homogene oder heterogene Mischung von Formaldehydfänger und Katalysator verwendet.

7. Verfahren nach Anspruch 5, dadurch gekennzeichnet, daß man Formaldehydfängerpartikel verwendet, die durch Benetzen der Oberfläche der Partikel mit einer Lösung oder Suspension des Katalysators hergestellt wurden.

8. Verfahren nach einem der Ansprüche 5 bis 7, dadurch gekennzeichnet, daß man als Katalysator eine Substanz verwendet, die den Schmelzpunkt des Formaldehydfängers herabsetzt.

9. Verfahren nach einem der Ansprüche 5 bis 8, dadurch gekennzeichnet, daß man als Katalysator Ammoniumchlorid oder Ammoniumsulfat verwendet.

10. Verfahren nach einem der vorhergehenden Ansprüche, dadurch gekennzeichnet, daß man als Formaldehydfänger Melamine, Dicyandiamid, Thioharnstoff, Dibutylthioharnstoff, Ammoniumcarbonat, Polyacrylsäureamide, Guanidin, Carbamate mit freien Amidfunktionen, Phenole, Resorcin oder Diphenylmethandiisocyanat und insbesondere Harnstoff verwendet.

11. Verfahren nach einem der vorhergehenden Ansprüche, dadurch gekennzeichnet, daß man den Formaldehydfänger unter die mit vorkondensiertem Formaldehydharz beleimten Deckschichtspäne einer Spanplatte mischt, während die Mittelschicht mit formaldehydfreien Harzen, insbesondere Phenolharzen oder Isocyanatharzen, beleimt wurde.

12. Verfahren nach einem der vorhergehenden Ansprüche, dadurch gekennzeichnet, daß man als Formaldehydharz ein formaldehydarmes Mischkondensat, insbesondere ein Harnstoff-Formaldehydharz mit 1 - 10 % Melaminharz, verwendet.

13. Verfahren nach einem der vorhergehenden Ansprüche, dadurch gekennzeichnet, daß man den Formaldehydfänger in Leimfugen zur Verbindung von Teilen wie Holzfurnieren, Schichthölzern, Holzleimbauteilen, Schichtformteilen, soweit sie unter Hitzeeinwirkungen aushärten, einbringt.

14. Verwendung von Harnstoff in fester Form, wie in einem der Ansprüche 1, 4 und 7 bis 10 definiert, zur Verringerung der Formaldehyd-Emission von mit Formaldehydharzen, insbesondere Harnstoff-Formaldehydharzen, verleimten Gegenständen.

## Claims

1. Process for the preparation of composite materials with a lowered formaldehyde emission, especially those consisting of cellulose-containing materials, using a formaldehyde acceptor, in which material components are impregnated with an aqueous or pulverulent precondensed formaldehyde resin, a moulded part is produced from these components and the moulded part is then hardened by the action of heat, characterised in that hardening is effected in the presence of a pulverulent or prilled formaldehyde acceptor which is provided with a water-resistant and/or water-impermeable coating.

2. Process according to claim 1, characterised in that the formaldehyde acceptor is applied to the impregnated components.

3. Process according to claim 1, characterised in that the formaldehyde acceptor is applied to or intermixed with the material to be glued prior to gluing or is added to the formaldehyde resin.

4. Process according to claim 3, characterised in that the formaldehyde acceptor in prilled form additionally includes an inert material in order to adjust the specific weight of the particles so as to give a stable suspension of the particles of the formaldehyde acceptor in the formaldehyde resin.

5. Process according to one of the preceding claims, characterised in that the formaldehyde acceptor is used together with a catalyst in solid or liquid form.

6. Process according to claim 5, characterised in that a homogeneous or heterogeneous mixture of formaldehyde acceptor and catalyst is used.

7. Process according to claim 5, characterised in that the formaldehyde acceptor particles used are produced by wetting the surface of the particles with a solution or suspension of the catalyst.

8. Process according to one of claims 5 to 7, characterised in that a substance which reduces the melting point of the formaldehyde acceptor is used as the catalyst.

9. Process according to one of claims 5 to 8, characterised in that ammonium chloride or ammonium sulphate is used as the catalyst.

10. Process according to one of the preceding claims, characterised in that melamines, dicyandiamide, thiourea, dibutyl thiourea, ammonium carbonate, polyacrylamides, guanidine, carbamates with free amide functions, phenols, resorcinol or diphenylmethane diisocyanate and especially urea are used as the formaldehyde acceptor.

11. Process according to one of the preceding claims, characterised in that the formaldehyde acceptor is intermixed with the fines of chipboard glued with precondensed formaldehyde resin, while the core layer is glued with formaldehyde-free resins, especially phenolic resins or isocyanate resins.

12. Process according to one of the preceding claims, characterised in that a co-condensate low in formaldehyde, especially a urea formaldehyde resin with 1 - 10 % melamine resin, is used as the formaldehyde resin.

13. Process according to one of the preceding claims, characterised in that the formaldehyde acceptor is introduced into glued joints for connecting components such as wood veneers, wood laminates, glulam members, laminated parts, in so far as they harden by the action of heat.

14. Use of urea in solid form as defined in one of claims 1, 4 and 7 to 10, in order to lower the formaldehyde emission of articles glued with formaldehyde resins, especially urea formaldehyde resins.

## Revendications

1. Procédé de fabrication de matériaux composites avec émission réduite de formaldéhyde, en particulier de matériaux contenant de la cellulose, par utilisation d'un absorbeur de formaldéhyde, procédé dans lequel on imprègne des fragments de matériaux d'une résine de formaldéhyde précondensée aqueuse ou pulvérulente, on fabrique à partir de ces fragments un objet moulé puis on durcit l'objet moulé par action de la chaleur, caractérisé en ce que le durcissement s'effectue en présence d'un absorbeur de formaldéhyde pulvérulent ou granulé, qui est muni d'un revêtement résistant à l'eau et/ou imperméable à l'eau.

2. Procédé selon la revendication 1, caractérisé en ce qu'on applique l'absorbeur de formaldéhyde sur les fragments imprégnés.

3. Procédé selon la revendication 1, caractérisé en ce qu'on applique l'absorbeur de formaldéhyde sur le matériau à encoller ou qu'on le mélange à celui-ci, avant le collage, ou qu'on le verse dans la résine de formaldéhyde.

4. Procédé selon la revendication 3, caractérisé en ce que l'absorbeur de formaldéhyde sous forme granulée comprend en outre une matière inerte, pour ajuster la masse spécifique des particules de telle manière que l'on obtienne une suspension stable des particules d'absorbeur de formaldéhyde dans la résine de formaldéhyde.

5. Procédé selon l'une des revendications précédentes, caractérisé en ce qu'on utilise l'absorbeur de formaldéhyde avec un catalyseur sous forme solide ou liquide.

6. Procédé selon la revendication 5, caractérisé en ce qu'on utilise un mélange homogène ou hétérogène d'absorbeur de formaldéhyde et de catalyseur.

7. Procédé selon la revendication 5, caractérisé en ce qu'on utilise des particules d'absorbeur de formaldéhyde qui ont été fabriquées par imprégnation de la surface des particules avec une solution ou une suspension du catalyseur.

8. Procédé selon l'une des revendications 5 à 7, caractérisé en ce qu'on utilise comme catalyseur une substance qui abaisse le point de fusion de l'absorbeur de formaldéhyde.

9. Procédé selon l'une des revendications 5 à 8, caractérisé en ce qu'on utilise comme catalyseur du chlorure d'ammonium ou du sulfate d'ammonium.

10. Procédé selon l'une des revendications précédentes, caractérise en ce qu'on utilise comme absorbeur de formaldéhyde de la mélamine , du dicyandiamide, de la thio-urée, de la dibutylthiourée, du carbonate d'ammonium, des polyacrylamides, de la guanidine, des carbametes ayant des fonctions amide libres, des phénols, du résorcinol ou du diphénylméthanediisocyanate et en particulier de l'urée.

11. Procédé selon l'une des revendications précédentes, caractérisé en ce qu'on mélange l'absorbeur de formaldéhyde aux copeaux de la couche de recouvrement d'un panneau de particules encollée avec une résine de formaldéhyde précondensée, tandis que la couche centrale est encollée avec des résines exemptes de formaldéhyde, en particulier des résines phénoliques ou des résines d'isocyanate.

12. Procédé selon l'une des revendications précédentes, caractérisé en ce qu'on utilise comme résine de formaldéhyde un condensat mixte à faible teneur en formaldéhyde, en particulier une résine urée-formaldéhyde contenant 1 à 10 % de résine mélamine.

13. Procédé selon l'une des revendications précédentes, caractérisé en ce qu'on incorpore l'absorbeur de formaldéhyde dans des joints collés pour la liaison de pièces telles que des placages de bois, des bois stratifiés, des éléments de construction en bois lamellé-collé, des pièces moulées stratifiées, pour autant qu'ils durcissent sous l'action de la chaleur.

14. Utilisation d'urée sous forme solide, telle que définie dans l'une des revendications 1, 4 et 7 à 10, pour réduire l'émission de formaldéhyde d'objets encollés avec des résines de formaldéhyde, en particulier des résines urée-formaldéhyde.
